# EUROPÄISCHE PATENTSCHRIFT

(11) **EP 3 710 121 B1**
(45) Veröffentlichungstag und Bekanntmachung des Hinweises auf die Patenterteilung: **16.08.2023**
(21) Anmeldenummer: 18804251.9
(22) Anmeldetag: 07.11.2018
(51) Int. Cl.: A62C 37/42, F16K 1/20, F16K 17/38, F16K 17/36, F16K 31/06, F16K 37/00

(54) **AUSLÖSEVORRICHTUNG EINES LÖSCHSYSTEMS**
TRIGGERING DEVICE OF AN EXTINGUISHING SYSTEM
DISPOSITIF DE DÉCLENCHEMENT D'UN SYSTÈME D'EXTINCTION

(30) Priorität: 14.11.2017 AT 509562017
(43) Veröffentlichungstag der Anmeldung: 23.09.2020
(73) Patentinhaber: Hoerbiger Wien GmbH, 1220 Wien (AT)
(72) Erfinder: SPIEGL, Bernhard, 1230 Wien (AT); KERNBICHLER, Christian, 2401 Fischamend (AT); KORNFELD, Matthias, 2345 Brunn/Geb. (AT); SCHRAGL, Thomas, 1030 Wien (AT)
(74) Vertreter: Patentanwälte Pinter & Weiss OG
(86) Internationale Anmeldenummer: PCT/EP2018/080411
(87) Internationale Veröffentlichungsnummer: WO 2019/096639

(56) Entgegenhaltungen:
- EP-A1- 1 025 878
- DE-C- 284 194
- US-A1- 2015 144 361

## Beschreibung

Die Erfindung betrifft ein Löschsystem zur Explosionsunterdrückung mit einem Löschmittelbehälter, einem Verschlussorgan und zumindest einem Verriegelungselement, wobei der Löschmittelbehälter über das Verschlussorgan druckdicht verschließbar ist und das Verschlussorgan mittels des zumindest einen Verriegelungselements in der geschlossenen Position verriegelbar ist, wobei das Löschsystem eine Auslösevorrichtung aufweist, welche auf das Verriegelungselement wirkt, wobei die Auslösevorrichtung einen Verschiebebolzen aufweist, welcher eine Raste aufweist, wobei das Löschsystem durch eine Bewegung des Verschiebebolzens von einer Sperrposition in eine Freigabeposition auslösbar ist und wobei die Auslösevorrichtung einen Klinkenkörper mit einer Klinkenflanke aufweist, die dazu ausgebildet ist, in der Sperrposition mit der Raste des Verschiebebolzens zusammenzuwirken, um den Verschiebebolzen gegen eine in Freigaberichtung wirkende Vorspannkraft in der Sperrposition zu halten, wobei ein im Löschmittelbehälter vorherrschender Systemdruck, welcher auf das Verschlussorgan wirkt und dadurch eine Kraft auf eine Riegelfläche des Verriegelungselements ausübt, die Vorspannkraft bewirkt.

In einem weiteren Aspekt betrifft die Erfindung ein Verfahren zur Durchführung einer Testauslösung mit einem Löschsystem.

Zur Explosionsunterdrückung kommen schnell auslösende Löschsysteme zum Einsatz, wobei insbesondere Pulverlöscher mit Natronpulver und Stickstoff mit einem Systemdruck von ca. 60 bar im Einsatz sind. Sobald Drucksensoren eine beginnende Explosion erkennen, wird ein Verschlusssystem des Löschers geöffnet, wobei aufgrund der erforderlichen kurzen Reaktionszeiten das Verschlusssystem im Allgemeinen mit Explosivstoffen aufgesprengt wird. Bei der Auslösung kommt es auf eine sehr hohe Dynamik an, wobei Auslösezeiten von unter 10 ms erreicht werden müssen.

Die Explosivstoffe stellen in vielfacher Hinsicht ein Problem dar, wobei insbesondere die Kosten, das Handling, die Lagerung, der Transport, der Ersatzteilversand, die Lagerhaltung, der Import in verschieden Länder, die Haltbarkeit oder die Überprüfbarkeit jeweils eigene Problembereiche bilden.

Der Versuch, diese Explosivstoffe durch mechanische Mittel zu ersetzen, bietet zahlreiche technische Hürden. Insbesondere sind mit Auslösesystemen aus verwandten technischen Bereichen, etwa aus herkömmlichen Brandlöschsystemen, die für die Explosionsunterdrückung erforderlichen kurzen Auslösezeiten nicht erreichbar.

EP 1025878 A1 offenbart einen mechanischen Auslösemechanismus für einen Pulverlöscher zur Explosionsunterdrückung, bei dem die Freigabe einer Sperrklinke über einen Drehaktor mit zwischengelagerten Rollkörpern erfolgt. Dies verringert die Systemreibung, was für ein betriebssicheres und schnelles Öffnen wesentlich ist. Der Drehaktor wird über einen Torque-Motor angetrieben.

DE 284194 C offenbart ein Türschloss mit einem Riegel, der in seiner komplett gesperrten Position in eine elektronisch lösbare Klinke eingreift.

EP 1025878 A1 offenbart eine Auslösevorrichtung für ein Löschsystem zur Explosionsunterdrückung. Zur Auslösung wird ein Rotor mittels eines Torque-Motors drehend angetrieben, wobei ein vom Rotor bewegter Rollkörper in eine instabile Lage gerät und in eine Entriegelungsposition springt. Dabei wird eine Sperrklinke freigegeben, und dieses löst als Teil einer Klinkenkaskade mit Kraftuntersetzungsmechanik die Kaskade gesamthaft aus.

Aus der US 2015/144361 A1 ist ebenfalls ein Löschsystem mit einer Auslösevorrichtung bekannt. Zur Auslösung wird ein Stift innerhalb eines Solenoids bewegt, wodurch mehrere zusammenwirkende Gestänge freigegeben werden, um einen Auslösearm zu bewegen. Durch die Bewegung des Auslösearms wird eine Verschlusseinheit einer Ventilbaugruppe, welche eine Öffnung des Löschmittelbehälters verschließt, freigegeben und kann in eine Offenposition bewegt werden.

Weiterhin besteht ein Bedarf an Auslösevorrichtungen für schnell auslösende Löschsysteme zur Explosionsunterdrückung, die einfach im Aufbau und kostengünstig herzustellen sind, und die eine erhöhte Betriebssicherheit und verringerten Wartungsaufwand haben. Es ist eine Aufgabe der gegenständlichen Erfindung, solche Systeme bereitzustellen.

Diese und weitere Aufgaben werden erfindungsgemäß durch ein Löschsystem der eingangs genannten Art dadurch gelöst, dass ein Elektromagnet vorgesehen ist, welcher direkt auf den Klinkenkörper wird, wodurch der Klinkenkörper bewegbar ist, um den Eingriff der Raste und der Klinkenflanke zu lösen und den Verschiebebolzen freizugeben. Dies verringert die Anzahl der erforderlichen bewegten Teile der Auslösevorrichtung und erlaubt eine rasche Auslösung.

Größe, Geometrie und Windung des Elektromagneten können auf eine hohe Dynamik und einen geringen Energieeinsatz optimiert werden. Dabei ist zu berücksichtigen, dass die zur Auslösung nötige Energie am Löschsystem gespeichert werden muss, und aus Sicherheitsgründen bestimmte Energiemengen in den Kondensatoren nicht überschritten werden dürfen. Indem der Elektromagnet direkt auf den Klinkenkörper wirkt, kann die Systemreibung minimiert werden.

In einer vorteilhaften Ausführungsform kann der Klinkenkörper als einteiliger Körper ausgebildet sein, wodurch sich die Anzahl der beweglichen Teile minimieren lässt.

In vorteilhafter Weise kann der Klinkenkörper mittels einer Rückstellfeder in Richtung eines Eingriffs der Raste und Klinkenflanke vorgespannt sein. Die Rückstellfeder dient nicht nur der Rückstellung nach einer Testauslösung sondern auch der Sicherheit gegen Vibrationen und Schläge und wird so dimensioniert, dass ausreichend Sicherheit gegen Selbstauslösung auch bei den höchsten auftretenden Beschleunigungen besteht.

In einer bevorzugen erfindungsgemäßen Ausführungsform kann ein Luftspalt zwischen dem Klinkenkörper und dem Elektromagneten einen sich keilartigen verjüngenden Querschnitt aufweisen. Dies ermöglicht eine höhere Krafteinwirkung des Elektromagneten auf den Klinkenkörper, während gleichzeitig die für die Freigabe der Raste durch die Klinke erforderliche Bewegung ermöglicht wird.

In einer weiteren vorteilhaften Ausführungsform der Erfindung kann der Klinkenkörper um einen Angelpunkt schwenkbar gelagert sein. Durch eine optimierte Anordnung des Angelpunktes und der Abstände zur Klinkenflanke kann ein hochdynamisches und zuverlässiges Auslösen ermöglicht werden. Durch die Anpassung der Anordnung und Form des Klinkenkörpers sowie der Winkel der Klinkenflanke kann das Auslöseverhalten weiter optimiert und von der wirkenden Kraft am Verschiebebolzen unabhängig gemacht werden.

In einer vorteilhaften Ausführungsform kann der Angelpunkt in einem Bereich zwischen der Raste und einem Verbindungskopf des Verschiebebolzens neben dem Verschiebebolzen angeordnet sein, wobei der Angelpunkt vorzugsweise in einem Abstand von maximal 15 mm von der Bolzenachse insbesondere vertikal beabstandet ist. Dadurch lassen sich die zur Auslösung erforderlichen Kräfte und die Baugröße minimieren. Der Angelpunkt kann dabei als ein Schwenklager ausgeführt sein.

Der Angelpunkt kann in einer weiteren vorteilhafter Ausführungsform in einer gedachten Verlängerung des Verschiebebolzens in einer Freigaberichtung hinter der Raste angeordnet sein, wobei der Angelpunkt vorzugsweise in einem Abstand von maximal 15 mm von der Bolzenachse insbesondere vertikal beabstandet ist.

Der Angelpunkt kann beispielsweise durch eine in einer Innenkante eines Gehäuses gelagerte Außenkante des Klinkenkörpers gebildet sein. Dies verringert einerseits die Systemreibung, andererseits wird die Komplexität und Fehleranfälligkeit der Mechanik minimiert.

In vorteilhafter Weise kann der Angelpunkt in einem Abstand von zwischen 10 mm und 50 mm zum Elektromagneten positioniert sein.

In einer weiteren vorteilhaften Ausführungsform kann ein Klinkensensor zur Überwachung der Stellung des Klinkenkörpers vorgesehen sein. Dies erlaubt es, den Sperrzustand der Auslösevorrichtung aus der Ferne zu überwachen.

In vorteilhafter Weise kann das Verriegelungselement mittels eines elektromechanischen Aktors in der das Verschlussorgan verriegelnden Stellung blockierbar sein. Ein Blockieren des Verriegelungselements ist insbesondere für Wartungszwecke notwendig, wenn ein Auslösen des Löschsystems aus Sicherheitsgründen vermieden werden muss. Mit dem elektromechanischen Aktor kann die Verriegelung direkt über ein zentrales Steuerungssystem erfolgen. Das Verriegelungssignal kann über ein Buskabel zu den betroffenen Löschern geschickt werden und die Verriegelung erfolgt durch einen elektromechanischen Aktor.

In einer vorteilhaften Ausgestaltung kann ein Aktorsensor zur Überwachung der Stellung des Aktors vorgesehen sein. Dadurch kann das Erreichen der Verriegelungsposition aus der Ferne überwacht werden. Erst nach Erreichen der Verriegelungsposition wird ein entsprechendes Signal an das Steuerungssystem gesendet. Besonders bei exponierten Anlagenteilen, wie etwa hohen Silos, ist eine solcherart überwachbare Fernverriegelung ein großer Zugewinn.

In vorteilhafter Weise kann erfindungsgemäß zumindest der Aktorsensor, der Klinkensensor, der Aktor und der Elektromagnet mit einem Steuerungssystem verbunden sein. Dies erlaubt es, eine voll- oder teilautomatische Testauslösung zentral gesteuert durchzuführen, was den Aufwand für die Wartung und Überprüfung der Anlage minimiert.

Erfindungsgemäß kann die Durchführung einer Testauslösung mit dem Löschsystem gemäß einem Verfahren erfolgen, das die folgenden Schritte aufweist: Blockieren des Verriegelungselements in der das Verschlussorgan verriegelnden Stellung mittels des Aktors, Überprüfen der Blockierung mittels des Aktorsensors, Freigeben des Verschiebebolzens durch Lösen des Klinkenkörpers mittels des Elektromagneten, Prüfen der erfolgten Testauslösung mittels des Klinkensensors, Rückstellen des Klinkenkörpers, Überprüfen der Position des Klinkenkörpers, entsichern des Verriegelungselements mittels des Aktors. Diese Schritte können über das Steuerungssystem vollautomatisch ausgeführt werden, ohne dass ein manueller Eingriff in das Löschsystem erforderlich ist.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 ein erfindungsgemäßes Löschsystem in einer Schnittdarstellung,
Fig. 2 eine erfindungsgemäße Auslösevorrichtung gemäß einer ersten Ausführungsform in einer Schnittdarstellung und
Fig. 3 eine erfindungsgemäße Auslösevorrichtung gemäß einer zweiten Ausführungsform in einer Schnittdarstellung.

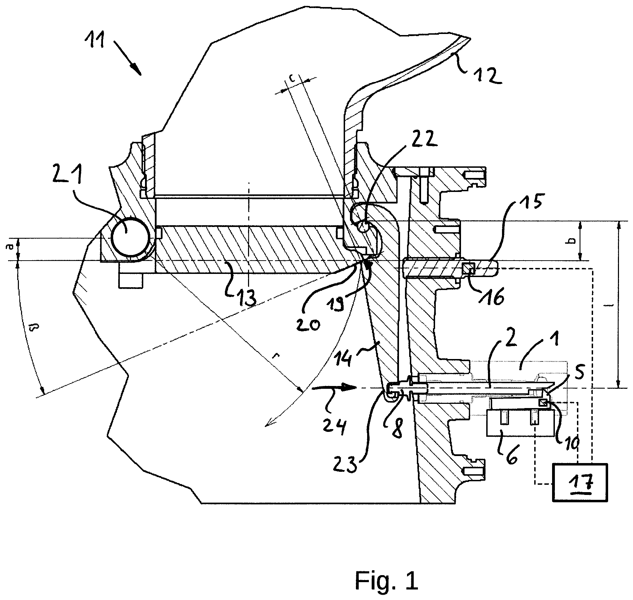

Fig. 1 zeigt das erfindungsgemäße Löschsystem 11 in einem Querschnitt. In an sich bekannter Weise ist ein Löschmittelbehälter 12 mit einem als Klappe ausgeführten Verschlussorgan 13 verschlossen. Der Löschmittelbehälter 12 ist druckbeaufschlagt und mit einem Löschmittel gefüllt. Als Löschmittel kann beispielsweise ein Natronpulver enthaltendes Pulver verwendet werden, wobei der Löschmittelbehälter mit Stickstoff auf einen Systemdruck von ca. 60 bar gebracht wird. Das Verschlussorgan 13 wird mit einem hebelartig ausgebildeten Verriegelungselement 14 verriegelt. Dabei drückt das Verriegelungselement 14 mit einer Riegelfläche 19 gegen eine Andruckfläche 20 des Verschlussorgans 13.

Die Abmessungen und relative Anordnung der Berührebene zwischen Riegelfläche 19 und Andruckfläche 20, des Drehzentrums eines Schwenklagers 21 des Verschlussorgans 13 und des Drehzentrums eines Hebellagers 22 des Verriegelungselements 14, sowie die Abmessungen des Verschlussorgans 13 und des Verriegelungselements 14 können optimiert werden, um einerseits eine sichere druckdichte Verriegelung des Löschmittelbehälters 12 durch das Verschlussorgan 13 sicherzustellen, und andererseits beim Auslösen des Löschsystems 11 ein ausreichend schnelles entriegeln des Verriegelungselements 13 und Öffnen des Verschlussorgans 13 zu gewährleisten.

Die Verriegelung wird gelöst, indem ein vom Hebellager 22 beabstandetes Betätigungsende 23 des Verriegelungselement 14 in einer Freigaberichtung 24 bewegt wird. Dazu ist das Verriegelungselement 14 am Betätigungsende 23 mit einem Verbindungskopf 8 eines Verschiebebolzens 2 mit einer Auslösevorrichtung 1 verbunden, die untenstehend detaillierter beschrieben ist. Gegebenenfalls kann das Betätigungsende des Verriegelungselements 14 auch direkt auf den Verschiebebolzen 2 wirken (ohne einem Verbindungskopf 8). Je kürzer die erforderliche Bewegung des Betätigungsendes 23 ist, um ein Entriegeln des Verschlussorgans 13 zu bewirken, desto schneller kann eine Auslösung des Löschsystems 11 erfolgen. Andererseits ist die Bewegung nicht beliebig minimierbar, da ein sicherer Verschluss des Löschmittelbehälters 12 gewährleistet sein muss.

Damit keine zusätzlichen Spannelemente erforderlich sind, können die Abmessungen und Anordnungen von Verschlussorgan 13 und Verriegelungselement 14 vorzugsweise so gewählt werden, dass das Betätigungsende 23 alleine aufgrund des im Löschmittelbehälter 12 vorherrschenden Systemdrucks in Freigaberichtung 24 vorgespannt ist. Der Systemdruck wirkt dabei auf das Verschlussorgan 13, welches über die Andruckfläche 20 eine Kraft auf die Riegelfläche 19 des Verriegelungselements 14 ausübt, die wiederum eine Vorspannung in Freigaberichtung 24 bewirkt.

Durch die Vorspannung übt das Betätigungsende 23 in Freigaberichtung 24 einen Druck auf den Verschiebebolzen 2 der Auslösevorrichtung 1 aus. Der Verschiebebolzen 2 weist an einer vom Verbindungskopf 8 in Freigaberichtung 24 beabstandeten Position eine Raste 3 auf, die von einer Klinkenflanke 4 eines Klinkenkörpers 5 gegen die Vorspannkraft gehalten wird. Zum Auslösen des Löschsystems wird durch eine Bewegung des Klinkenkörpers 5 die Raste 3 freigegeben, sodass sich der Verschiebebolzen 2 in Freigaberichtung 24 in eine Freigabeposition bewegt. Die auf den Verbindungskopf 8 bzw. direkt auf den Verschiebebolzen 2 wirkende Vorspannkraft muss also ausreichend groß sein, um die Systemreibung in der Auslösevorrichtung 1 zu überwinden und den Verschiebebolzen 2 hochdynamisch (d.h. ausreichend schnell für den gewünschten Zweck der Explosionsunterdrückung) in die Freigabeposition zu bewegen.

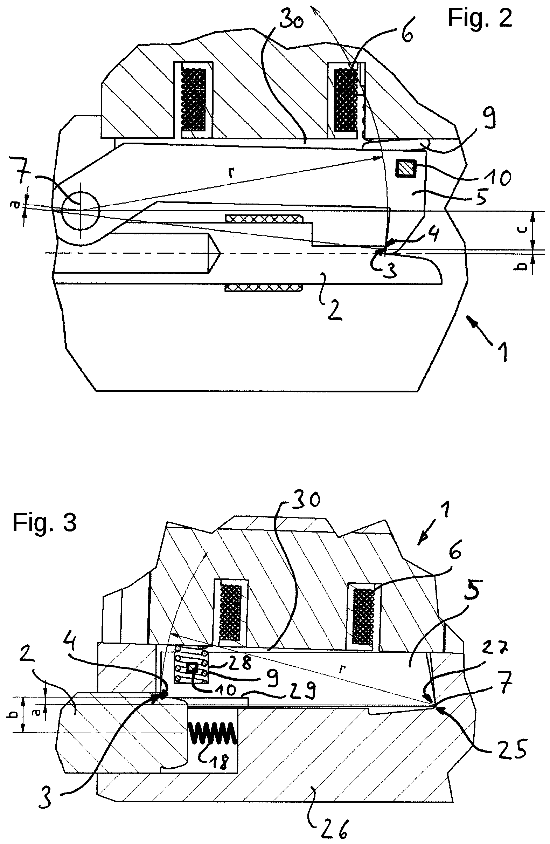

Unter Bezugnahme auf Fig. 2 wird nun eine beispielhafte erfindungsgemäße Ausführungsform der Auslösevorrichtung 1 detailliert beschrieben. Der Klinkenkörper 5 weist eine im Wesentlichen hakenartige Form auf und ist an einem Angelpunkt 7 schwenkbar gelagert, wobei der Angelpunkt 7 im Bereich zwischen dem Verbindungskopf 8 und der Raste 3 oberhalb neben dem Verschiebebolzen 2 angeordnet ist. Die Form des Klinkenkörpers 5, die Position des Angelpunkts 7 und der Raste 3 (bzw. der Klinkenflanke 4) sind so aufeinander abgestimmt, dass zwischen Raste 3 und Klinkenflanke 4 nur geringe Reibungskräfte wirken. Dies kann insbesondere erreicht werden, indem der Angelpunkt 7 nahe an der Bolzenachse, vorzugsweise in einer Entfernung von maximal 15 mm von der Bolzenachse angeordnet wird.

Der Angelpunkt 7 (bzw. der Klinkenkörper 5) kann vorzugsweise vertikal oberhalb oder unterhalb des Verschiebebolzens 2, aber auch seitlich oder unter einem anderen Winkel dazu angeordnet sein. Eine Anordnung vertikal oberhalb oder unterhalb erleichtert jedoch die Berücksichtigung der auf den Klinkenkörper 5 wirkenden Schwerkraft.

Der Klinkenkörper 5 wird zusätzlich durch eine Rückstellfeder 9 in der gesperrten Position gehalten. Die Rückstellfeder 9 dient nicht nur der Rückstellung nach einer Testauslösung sondern auch der Sicherheit gegen Vibrationen und Schläge und wir so dimensioniert, dass ausreichend Sicherheit gegen Selbstauslösung auch bei den höchsten auftretenden Beschleunigungen besteht.

An der dem Verschiebebolzen 2 abgewandten Seite des Klinkenkörpers 5 ist unter einem geringen Abstand zum Klinkenkörper 5 ein Elektromagnet 6 angeordnet. Der Klinkenkörper weist ein Ankermaterial auf (d.h. ein Material, auf das das vom Elektromagneten 6 angeregte elektromagnetische Feld eine Anziehungskraft ausübt), sodass er vom aktivierten Elektromagneten 6 gegen die Rückstellkraft der Rückstellfeder 9 angezogen und in Richtung zum Elektromagneten 6 hin bewegt werden kann. In vorteilhafter Weise kann der Klinkenkörper 5 als Ganzes aus dem Ankermaterial bestehen. Der Abstand zwischen Klinkenkörper 5 und Elektromagnet 6 bildet einen möglichst dünnen Luftspalt, der gerade ausreichend groß ist, um die Klinkenflanke 4 aus dem Eingriff der Raste 3 zu bringen, wenn der Elektromagnet 6 aktiviert wird.

Durch die Schwenkbewegung des Klinkenkörpers 5 um den Angelpunkt 7 kann die Entfernung zwischen Klinkenkörper 5 und Elektromagneten 6 in der Nähe des Ankerpunkts 7 geringer ausgeführt werden, als im Bereich des Klinkenflanke 4, wo zum Freigeben der Raste 3 die maximale Auslenkung des Klinkenkörpers 5 erforderlich ist. Der Luftspalt kann somit einen sich zum Ankerpunkt 7 hin verjüngenden, keilartigen Verlauf aufweisen. Dadurch ist der Luftspalt im Bereich der Wicklungen des Elektromagneten 6, der näher beim Ankerpunkt 7 liegt, sehr schmal, was die Wirkung des Elektromagneten 6 auf den Klinkenkörper 7 maximiert.

Die Lage des Klinkenkörpers 5 kann über einen Klinkensensor 10 elektronisch überwacht werden.

Durch die Kombination des als hochdynamischen Magneten ausgebildeten Elektromagneten 6 mit der vorteilhaften Wahl des Angelpunkts 7 und der Abmessungen kann ein hochdynamisches und zuverlässiges Auslösen ermöglicht werden. Durch die Anpassung der Abmessungen des Klinkenkörpers 5 und insbesondere der Winkel der Klinkenflanke 4 kann das Auslöseverhalten weiter optimiert und von der auf den Verschiebebolzen 2 wirkenden Vorspannkraft weitgehend unabhängig gemacht werden.

In Fig. 3 ist eine weitere vorteilhafte Ausführungsform der erfindungsgemäßen Auslösevorrichtung 1 dargestellt. Der Klinkenkörper 5 der Ausführungsform der Fig. 3 ist im Wesentlichen als einfache "Platte" ausgebildet, wobei die Klinkenflanke 4 an einer Kante des Klinkenkörpers 5 angeordnet ist. Eine der Klinkenflanke 4 in Freigaberichtung gegenüberliegende Kante des Klinkenkörpers 5 bildet den Angelpunkt 7, wobei dieser Angelpunkt 7 durch die in einer Innenkante 25 eines Gehäuses 26 gelagerte Außenkante 27 des Klinkenkörpers 5 gebildet ist. Durch die im Wesentlichen punktförmige Lagerung wird die Reibung minimiert und es sind auch keine zusätzlichen Bauteile für die Lagerung erforderlich. Insbesondere werden aus dem Verschiebebolzen 2 auf den Klinkenkörper 5 wirkende Kräfte im Angelpunkt 7 ohne nennenswerte Reibmomente aufgenommen wodurch die Auslösekraft kaum von der anstehenden Vorspannkraft beeinflusst ist.

Ein weiterer Vorteil dieser Ausführungsform liegt darin, dass der Luftspalt zwischen Klinkenkörper 5 und Elektromagneten 6 gegenüber der in Fig. 2 dargestellten Ausführungsform nochmals minimiert wurde. Der Luftspalt ist dabei einseitig sehr niedrig, sodass mit dem Elektromagneten eine hohe Kraft und Dynamik erzielt werden kann.

Der Klingenkörper 5 wird mittels einer Rückstellfeder 9 von dem Elektromagneten 6 weg und in einen Eingriff von Klinkenflanke 4 und Raste 3 gedrückt. Die Rückstellfeder 9 kann in einer in den Klingenkörper 5 vorgesehene Bohrung 28 eingesetzt sein, was einen einfachen Zusammenbau ermöglicht und die Anzahl der erforderlichen Montageelemente minimiert.

Die Raste 3 des Verschiebebolzens 2 kann als ringförmig um den Verschiebebolzen 2 verlaufende Fläche ausgebildet sein, sodass der Verschiebebolzen 2 als Drehkörper ausgebildet sein kann, der einfach herzustellen ist, und der in einer beliebig verdrehten radialen Position eingebaut werden kann, was den Zusammenbau vereinfacht. Um eine optimale Anlagerung zwischen Klinkenflanke 4 und Raste 3 zu gewährleisten, kann im Klinkenkörper 5 eine beispielsweise rinnenförmige Ausnehmung 29 vorgesehen sein, in die der Verschiebebolzen 2 passend aufgenommen wird, wenn er sich nach dem Auslösen in Freigaberichtung 24 bewegt.

Somit kann der Klinkenkörper 5 als einfacher, im Wesentlichen block- oder quaderförmiger Körper ausgebildet sein, in dem lediglich die Bohrung 28 und die Ausnehmung 29 eingebracht sind. Gegebenenfalls können einzelne Randflächen, etwa die an die Außenkante 27 anschließende kurze hintere Fläche, von einer Quaderform abweichend schräg ausgebildet sein.

Auch in dieser Ausführungsform kann die Lage des Klinkenkörpers 5 über einen Klinkensensor 10 elektronisch überwacht werden.

Eine Bolzenrückstellfeder 18 kann den Verschiebebolzen 2 gegen die Freigaberichtung 24 drücken, sodass das Verriegelungselement 14 auch dann in eine das Verschlussorgan 13 verriegelnde Position gedrückt wird, wenn etwa vor dem Befüllen noch kein Druck im Löschmittelbehälter 12 aufgebaut ist.

Zurückkommend zu Fig. 1 wird im Folgenden ein weiteres Sicherheitsmerkmal des erfindungsgemäßen Löschsystems 11 beschrieben.

An das Verriegelungselement 14 angrenzend ist ein elektromechanisch betätigbarer Aktor 15 angeordnet. Beispielsweise kann der Aktor im Wesentlichen als bewegbarer Bolzen (oder einer Nocke) ausgeführt sein, der in einer gegen das Verriegelungselement 14 herausgefahrenen Lage das Verriegelungselement 14 in der das Verschlussorgan 13 verriegelnden Position blockiert uns sichert, und der in einer zurückgezogenen Position dem Verriegelungselement 14 eine entriegelnde Bewegung ermöglicht und dieses somit "entsichert". Der Aktor kann elektromechanisch, mit oder ohne Getriebe, angetrieben sein. Über einen Aktorsensor 16 kann die Position des Aktors 15 auch von der Ferne her überwacht werden.

Die Blockierung des Verriegelungselements 14 durch den Aktor 15 kann während des Transports genutzt werden, oder wenn Servicearbeiten an den zu schützenden Behältern durchzuführen sind.

Sowohl die Stelleinheit (nicht dargestellt) des Aktors 15, als auch der Aktorsensor 16, der Klinkensensor 10, der Elektromagnet 6, sowie gegebenenfalls weitere Sensoren und Stelleinheiten können an ein zentrales Steuerungssystem 17 angeschlossen sein. Dadurch kann die Blockierung bzw. Sicherung zentral direkt über das Steuerungssystem 17 erfolgen, wobei mehrere Löschsysteme 11 in einer Anlage an dasselbe Steuerungssystem 17 angeschlossen sein können. Vorzugsweise über eine Busverbindung können Steuersignale zu den betroffenen Löschern geschickt und die Sensorsignale empfangen werden.

Das Blockieren des Verriegelungselements 14 durch den Aktor 15 kann somit vom Steuersystem 17 ausgelöst werden, wobei das Erreichen der Blockierenden Lage mit dem Aktorsensor überwacht wird.

In der blockierten Position ist es möglich, die ordnungsgemäße Funktion der Auslösevorrichtung durch eine Testauslösung zu überprüfen. Dabei kann über Sensoren neben der Gängigkeit auch die Dynamik ermittelt und mit hinterlegten Werten verglichen werden. Diese Überprüfbarkeit der Auslösung stellt einen weiteren großen Unterschied zu den mit Explosivstoffen ausgestatteten Systemen dar und kann eine deutlich bessere SIL-Einstufung bei einer Risikobewertung ermöglichen.

Automatische Testprozeduren in bestimmten Abständen mit Dokumentation können bei Anlagen implementiert werden.

### Bezugszeichen:

Auslösevorrichtung 1
Verschiebebolzen 2
Raste 3
Klinkenflanke 4
Klinkenkörper 5
Elektromagnet 6
Angelpunkt 7
Verbindungskopf 8
Rückstellfeder 9
Klinkensensor 10
Löschsystem 11
Löschmittelbehälter 12
Verschlussorgan 13
Verriegelungselement 14
Aktor 15
Aktorsensor 16
Steuerungssystem 17
Bolzenrückstellfeder 18
Riegelfläche 19
Andruckfläche 20
Schwenklagers 21
Hebellager 22
Betätigungsende 23
Freigaberichtung 24
Innenkante 25
Gehäuse 26
Außenkante 27
Bohrung 28
Ausnehmung 29
Luftspalt 30

## Patentansprüche

1. Löschsystem (11) zur Explosionsunterdrückung mit einen Löschmittelbehälter (12), einem Verschlussorgan (13) und zumindest einem Verriegelungselement (14), wobei der Löschmittelbehälter (12) über das Verschlussorgan (13) druckdicht verschließbar ist und das Verschlussorgan (13) mittels des zumindest einen Verriegelungselements in einer geschlossenen Position verriegelbar ist;
wobei das Löschsystem (11) eine Auslösevorrichtung (1) aufweist, welche auf das Verriegelungselement (14) wirkt, wobei die Auslösevorrichtung (1) einen Verschiebebolzen (2) aufweist, welcher eine Raste (3) aufweist, wobei das Löschsystem (11) durch eine Bewegung des Verschiebebolzens (2) von einer Sperrposition in eine Freigabeposition auslösbar ist und wobei die Auslösevorrichtung (1) einen Klinkenkörper (5) mit einer Klinkenflanke (4) aufweist, die dazu ausgebildet ist, in der Sperrposition mit der Raste (3) des Verschiebebolzens (2) zusammenzuwirken, um den Verschiebebolzen (2) gegen eine in Freigaberichtung (24) wirkende Vorspannkraft in der Sperrposition zu halten, wobei ein im Löschmittelbehälter (12) vorherrschender Systemdruck, welcher auf das Verschlussorgan (13) wirkt und dadurch eine Kraft auf eine Riegelfläche (19) des Verriegelungselements (14) ausübt, die Vorspannkraft bewirkt,
**dadurch gekennzeichnet, dass** ein Elektromagnet (6) vorgesehen ist, welcher direkt auf den Klinkenkörper (5) wirkt, wodurch der Klinkenkörper (5) bewegbar ist, um den Eingriff der Raste (3) und der Klinkenflanke (4) zu lösen und den Verschiebebolzen (2) freizugeben.

2. Löschsystem (11) nach Anspruch 1, **dadurch gekennzeichnet, dass** ein Luftspalt (30) zwischen dem Klinkenkörper (5) und dem Elektromagneten (6) einen sich keilartigen verjüngenden Querschnitt aufweist.

3. Löschsystem (11) nach einem der Ansprüche 1 bis 2, **dadurch gekennzeichnet, dass** der Klinkenkörper (5) als einteiliger Körper ausgebildet ist.

4. Löschsystem (11) nach einem der Ansprüche 1 bis 3, **dadurch gekennzeichnet, dass** der Klinkenkörper (5) mittels einer Rückstellfeder (9) in Richtung eines Eingriffs der Raste (3) und Klinkenflanke (4) vorgespannt ist.

5. Löschsystem (11) nach einem der Ansprüche 1 bis 4, **dadurch gekennzeichnet, dass** der Klinkenkörper (5) um einen Angelpunkt (7) schwenkbar gelagert ist.

6. Löschsystem (11) nach Anspruch 5, **dadurch gekennzeichnet, dass** der Angelpunkt (7) in einem Bereich zwischen der Raste (3) und einem Verbindungskopf (8) des Verschiebebolzens (2) neben dem Verschiebebolzen (2) angeordnet ist, wobei der Angelpunkt (7) vorzugsweise in einem Abstand von maximal 15 mm von der Bolzenachse insbesondere vertikal beabstandet ist.

7. Löschsystem (11) nach Anspruch 5, **dadurch gekennzeichnet, dass** der Angelpunkt (7) in einer gedachten Verlängerung des Verschiebebolzens (2) in einer Freigaberichtung (24) hinter der Raste (3) angeordnet ist, wobei der Angelpunkt (7) vorzugsweise in einem Abstand von maximal 15 mm von der Bolzenachse insbesondere vertikal beabstandet ist, wobei der Angelpunkt (7) vorzugsweise durch eine in einer Innenkante (25) eines Gehäuses (26) gelagerte Außenkante (27) des Klinkenkörpers (5) gebildet ist.

8. Löschsystem (11) nach Anspruch 6 oder 7, **dadurch gekennzeichnet, dass** der Angelpunkt (7) in einem Abstand von zwischen 10 mm und 50 mm zum Elektromagneten (6) positioniert ist.

9. Löschsystem (11) nach einem der Ansprüche 1 bis 8, **dadurch gekennzeichnet, dass** ein Klinkensensor (10) zur Überwachung der Stellung des Klinkenkörpers (5) vorgesehen ist.

10. Löschsystem (11) nach einem der Ansprüche 1 bis 9, **dadurch gekennzeichnet, dass** das Verriegelungselement (14) mittels eines elektromechanischen Aktors (15) in der das Verschlussorgan (13) verriegelnden Stellung blockierbar ist.

11. Löschsystem (11) nach Anspruch 10, **dadurch gekennzeichnet, dass** ein Aktorsensor (16) zur Überwachung der Stellung des Aktors (15) vorgesehen ist.

12. Löschsystem (11) nach Anspruch 11 und 9, **dadurch gekennzeichnet, dass** zumindest der Aktorsensor (16), der Klinkensensor (10), der Aktor (15) und der Elektromagnet (6) mit einem Steuerungssystem (17) verbunden sind.

13. Verfahren zur Durchführung einer Testauslösung mit einem Löschsystem (11) gemäß Anspruch 12, wobei das Verfahren durch die folgenden Schritte gekennzeichnet ist:
- Blockieren des Verriegelungselements (14) in der das Verschlussorgan (13) verriegelnden Stellung mittels des Aktors (15),
- Überprüfen der Blockierung mittels des Aktorsensors (16),
- Freigeben des Verschiebebolzens (2) durch Lösen des Klinkenkörpers (5) mittels des Elektromagneten (6),
- Prüfen der erfolgten Testauslösung mittels des Klinkensensors (10),
- Rückstellen des Klinkenkörpers (5),
- Überprüfen der Position des Klinkenkörpers (5),
- entsichern des Verriegelungselements (14) mittels des Aktors (15).

## Claims

1. Extinguishing system (11) for explosion suppression with an extinguishing agent container (12), a closure member (13) and at least one locking element (14), wherein the extinguishing agent container (12) can be closed in a pressure-tight manner via the closure member (13) and the closure member (13) can be locked in a closed position via the at least one locking element (14), wherein the extinguishing system (11) comprises a triggering device (1), which acts on the locking element (14), wherein the triggering device (1) comprises a sliding pin (2), which has a catch (3), wherein the extinguishing system (11) can be triggered by moving the sliding pin (2) from a blocking position to a release position, and wherein the triggering device (1) comprises a pawl body (5) with a pawl flank (4), which is designed to interact with the catch (3) of the sliding pin (2) in the blocking position to keep the sliding pin (2) in the blocking position against a preload force, which acts in a release direction (24), wherein a system pressure prevailing in the extinguishing agent container (12), which acts on the closure member (13) and thereby exerts onto a locking surface (19) of the closure member (13), causes the preload force, **characterized in that** an electromagnet (6) is provided, which acts directly on the pawl body (5), whereby the pawl body (5) can be move to release the engagement of the catch (3) and the pawl flank (4) and to release the sliding pin (2).

2. Extinguishing system (11) according to claim 1, **characterized in that** an air gap (30) between the pawl body (5) and the electromagnet (6) has a wedge-like tapering cross section.

3. Extinguishing system (11) according to any of claims 1 to 2, **characterized in that** the pawl body (5) is designed as an integral body.

4. Extinguishing system (11) according to any of claims 1 to 3, **characterized in that** the pawl body (5) is prestressed by a return spring (9) in the direction of an engagement of the catch (3) and the pawl flank (4).

5. Extinguishing system (11) according to any of claims 1 to 4, **characterized in that** the pawl body (5) is pivotally mounted about a pivot point (7).

6. Extinguishing system (11) according to claim 5, **characterized in that** the pivot point (7) is arranged in a region between the catch (3) and a connecting head (8) of the sliding pin (2) next to the sliding pin (2), wherein the pivot point (7) is preferably arranged, in particular vertically, at a maximum distance of 15 mm from the pin axis.

7. Extinguishing system (11) according to claim 5, **characterized in that** the pivot point (7) is arranged in an imaginary extension of the sliding pin (2) in a release direction (24) behind the catch (3), wherein the pivot point (7) is preferably arranged, in particular vertically, at a maximum distance of 15 mm from the pin axis, the pivot point (7) being formed by an outer edge (27) of the pawl body (5) mounted in an inner edge (25) of a housing (26).

8. Extinguishing system (11) according to either claim 6 or claim 7, **characterized in that** the pivot point (7) is positioned at a distance of between 10 mm and 50mm from the electromagnet (6).

9. Extinguishing system (11) according to any of claims 1 to 8, **characterized in that** a pawl sensor (10) is provided for monitoring the position of the pawl body (5).

10. Extinguishing system (11) according to any of claims 1 to 9, **characterized in that** the locking element (14) can be blocked by an electromechanical actuator (15) in the position of locking the closure member (13).

11. Extinguishing system (11) according to claim 10, **characterized in that** an actuator sensor (16) is provided for monitoring the position of the actuator (15).

12. Extinguishing system (11) according to claim 11 and 9, **characterized in that** at least the actuator sensor (16), a pawl sensor (10) for monitoring the position of the pawl body, the actuator (15) and the electromagnet (6) are connected to a control system (17).

13. Method for carrying out a test triggering using an extinguishing system (11) according to claim 12, the method being **characterized by** the following steps:
- blocking the locking element (14) in the position of locking the closure member (13) using the actuator (15),
- checking the blocking using the actuator sensor (16),
- releasing the sliding pin (2) by releasing the pawl body (5) using the electromagnet (6),
- checking that the test triggering was carried out using the pawl sensor (10),
- resetting the pawl body (5),
- checking the position of the pawl body (5),
- unlocking the locking element using the actuator (15).

## Revendications

1. Système d'extinction (11) pour la suppression d'explosions comportant un récipient d'agent d'extinction (12), un organe de fermeture (13) et au moins un élément de verrouillage (14), le récipient d'agent d'extinction (12) pouvant être fermé de manière étanche à la pression par l'intermédiaire de l'organe de fermeture (13) et l'organe de fermeture (13) pouvant être verrouillé dans une position fermée au moyen de l'au moins un élément de verrouillage ;
le système d'extinction (11) présentant un dispositif de déclenchement (1) qui agit sur l'élément de verrouillage (14), le dispositif de déclenchement (1) présentant un goujon coulissant (2) qui présente un encliquetage (3), le système d'extinction (11) pouvant être déclenché par un déplacement du goujon coulissant (2) d'une position de verrouillage vers une position de libération, et le dispositif de déclenchement (1) présentant un corps de cliquet (5) comportant un flanc de cliquet (4), lequel flanc de cliquet est conçu pour coopérer, dans la position de verrouillage, avec l'encliquetage (3) du goujon coulissant (2) afin de maintenir le goujon coulissant (2) dans la position de verrouillage à l'encontre d'une force de précontrainte agissant dans le sens de libération (24), une pression de système prédominante dans le récipient d'agent d'extinction (12), laquelle agit sur l'organe de fermeture (13) et exerce ainsi une force sur une surface de verrouillage (19) de l'élément de verrouillage (14), provoquant la force de précontrainte,
**caractérisé en ce qu'**un électroaimant (6) est prévu, lequel agit directement sur le corps de cliquet (5), moyennant quoi le corps de cliquet (5) peut être déplacé pour détacher la mise en prise de l'encliquetage (3) et du flanc de cliquet (4) et pour libérer le goujon coulissant (2).

2. Système d'extinction (11) selon la revendication 1, **caractérisé en ce qu'**un entrefer (30) entre le corps de cliquet (5) et l'électroaimant (6) présente une section transversale se rétrécissant de manière cunéiforme.

3. Système d'extinction (11) selon l'une des revendications 1 à 2, **caractérisé en ce que** le corps de cliquet (5) est réalisé sous la forme d'un corps d'une seule pièce.

4. Système d'extinction (11) selon l'une des revendications 1 à 3,
**caractérisé en ce que** le corps de cliquet (5) est précontraint au moyen d'un ressort de rappel (9) en direction d'une mise en prise de l'encliquetage (3) et du flanc de cliquet (4).

5. Système d'extinction (11) selon l'une des revendications 1 à 4,
**caractérisé en ce que** le corps de cliquet (5) est monté de manière pivotante autour d'un point d'appui (7).

6. Système d'extinction (11) selon la revendication 5,
**caractérisé en ce que** le point d'appui (7) est disposé dans une zone entre l'encliquetage (3) et une tête de liaison (8) du goujon coulissant (2) à côté du goujon coulissant (2), le point d'appui (7) étant de préférence espacé d'une distance de 15 mm maximum de l'axe de goujon, en particulier verticalement.

7. Système d'extinction (11) selon la revendication 5,
**caractérisé en ce que** le point d'appui (7) est disposé dans un prolongement imaginaire du goujon coulissant (2) dans une direction de libération (24) derrière l'encliquetage (3), le point d'appui (7) étant de préférence espacé d'une distance de 15 mm maximum de l'axe de goujon, en particulier verticalement, le point d'appui (7) étant de préférence formé par un bord extérieur (27) du corps de cliquet (5) monté dans un bord intérieur (25) d'un boîtier (26).

8. Système d'extinction (11) selon la revendication 6 ou 7,
**caractérisé en ce que** le point d'appui (7) est positionné à une distance comprise entre 10 mm et 50 mm par rapport à l'électroaimant (6).

9. Système d'extinction (11) selon l'une des revendications 1 à 8,
**caractérisé en ce qu'**un capteur de cliquet (10) est prévu pour la surveillance de la position du corps de cliquet (5).

10. Système d'extinction (11) selon l'une des revendications 1 à 9,
**caractérisé en ce que** l'élément de verrouillage (14) peut être bloqué dans la position verrouillant l'organe de fermeture (13) au moyen d'un actionneur électromécanique (15).

11. Système d'extinction (11) selon la revendication 10, **caractérisé en ce qu'**un capteur d'actionneur (16) est prévu pour la surveillance de la position de l'actionneur (15).

12. Système d'extinction (11) selon les revendications 11 et 9,
**caractérisé en ce qu'**au moins le capteur d'actionneur (16), le capteur de cliquet (10), l'actionneur (15) et l'électroaimant (6) sont reliés à un système de commande (17).

13. Procédé permettant de mettre en oeuvre un déclenchement de test à l'aide d'un système d'extinction (11) selon la revendication 12, le procédé étant **caractérisé par** les étapes suivantes :
- blocage de l'élément de verrouillage (14) dans la position verrouillant l'organe de fermeture (13) au moyen de l'actionneur (15),
- vérification du blocage au moyen du capteur d'actionneur (16),
- libération du goujon coulissant (2) en détachant le corps de cliquet (5) au moyen de l'électroaimant (6),
- vérification du déclenchement de test effectué à l'aide du capteur de cliquet (10),
- rappel du corps de cliquet (5),
- vérification de la position du corps de cliquet (5),
- enlèvement de la sécurité de l'élément de verrouillage (14) au moyen de l'actionneur (15).
